# DEMANDE DE BREVET EUROPEEN

(11) **EP 1 457 691 A2**
(43) Date de publication de la demande: **15.09.2004**
(21) Numéro de dépôt: 04290627.1
(22) Date de dépôt: 08.03.2004
(51) Int. Cl.: F16C 11/04

(54) **Procédé d'assemblage d'une bielle sur un support et dispositif anti-vibratoire fabrique par ce procédé**

(30) Priorité: 14.03.2003 FR 0303176
(71) Demandeur: HUTCHINSON, 75008 Paris (FR)
(72) Inventeur: vanHille, Patrick, 45190 Beaugency (FR); Bodin, Laurent, 45520 Chevilly (FR)
(74) Mandataire: Regi, François-Xavier

(57) **Abrégé**

Dispositif anti-vibratoire comportant une bielle (2) et un support (3). La bielle (2) étant assemblée avec le support (3) grâce à des clous (12, 13).

## Description

La présente invention est relative aux procédés d'assemblage d'une bielle sur un support et aux dispositifs anti-vibratoires comportant une bielle et un support assemblés selon ce procédé.

Plus particulièrement, l'invention concerne un procédé d'assemblage d'une bielle sur un support. Dans ce type de procédé, la bielle comporte un corps allongé selon une direction longitudinale entre des premier et deuxième manchons appartenant au corps. Dans cette bielle, au moins le premier manchon entoure une armature intérieure. Cette armature intérieure est mobile, par rapport au corps de la bielle, autour d'un axe de rotation, grâce à une liaison souple intercalée entre elle et le premier manchon. Un passage traverse l'armature intérieure sensiblement selon l'axe de rotation. Le support comporte un moins une patte de fixation munie d'un orifice de fixation.

On connaît des procédés grâce auxquels on assemble une telle bielle sur un tel support et dans lesquels on positionne la bielle et le support de manière à ce que le passage traversant l'armature intérieure soit en face de l'orifice de fixation et on assemble la bielle au support en passant une vis à la fois dans l'orifice et dans le passage et en serrant l'ensemble avec un écrou coopérant avec la vis.

L'opération de vissage, dans les procédés de montage en série, est réalisée avec une visseuse. Or, le contrôle du couple d'une visseuse est délicat.

La présente invention a notamment pour but de fournir un procédé d'assemblage d'une bielle sur un support permettant de s'affranchir, en particulier, de l'inconvénient mentionné ci-dessus des procédés d'assemblages avec vis et écrou.

A cet effet, on prévoit selon l'invention, un procédé d'assemblage d'une bielle sur un support qui, outre les caractéristiques déjà mentionnées, est caractérisé par le fait que l'on engage à force une tige de fixation, selon l'axe de rotation, dans l'orifice de fixation et dans au moins une partie du passage, de manière à maintenir la bielle sur le support et à empêcher la rotation de l'armature intérieure par rapport au support.

Grâce à ces dispositions, lorsque la tige de fixation est engagée à force dans l'orifice de fixation et dans au moins une partie du passage, la matière du support et la matière de l'armature intérieure sont déformées. La déformation de cette matière permet, avec une tige de fixation adaptée à cet effet, de maintenir la bielle sur le support et d'empêcher la rotation de l'armature intérieure par rapport à ce support. Ce procédé remplace avantageusement les procédés d'assemblage avec vis et écrou. L'utilisation d'une visseuse n'est donc plus nécessaire.

En outre, le procédé selon l'invention est particulièrement économique étant donné le gain de temps qui peut être réalisé par sa mise en oeuvre, par rapport à la mise en oeuvre d'un procédé d'assemblage avec vissage.

Dans des modes de réalisation préférés de l'invention, on peut éventuellement avoir recours en outre à l'une ou à l'autre des dispositions suivantes :
- le support comporte deux pattes de fixation munies chacune d'un orifice de fixation, on positionne la bielle et le support de manière à ce que le passage traversant l'armature intérieure s'étende entre les deux orifices de fixation et on engage à force une tige de fixation de manière à ce qu'elle passe à la fois par le passage et par chacun des orifices de fixation ; et
- le support comporte deux pattes de fixation munies chacune d'un orifice de fixation, on positionne la bielle et le support de manière à ce que le passage traversant l'armature intérieure s'étende entre les deux orifices de fixation et on engage à force deux tiges de fixation de manière à ce que chacune d'elles soit engagée à la fois dans au moins une partie du passage et dans l'un des orifices de fixation ; on obtient ainsi grâce au procédé selon l'invention un dispositif symétrique qui permet de s'affranchir des problèmes de montage.

Selon un autre aspect, l'invention concerne un dispositif anti-vibratoire comportant une bielle et un support :
- la bielle comporte un corps allongé selon une direction longitudinale entre des premier et deuxième manchons appartenant au corps, dans laquelle au moins le premier manchon entoure une armature intérieure, cette armature intérieure étant mobile, par rapport au corps de la bielle, autour d'un axe de rotation, grâce à une liaison souple intercalée entre elle et le premier manchon, et un passage traverse l'armature intérieure sensiblement selon l'axe de rotation, et
- le support comporte un moins une patte de fixation munie d'un orifice de fixation, et la bielle ainsi que le support sont assemblés de manière à ce que le passage traversant l'armature intérieure soit en face de l'orifice de fixation, et au moins une tige de fixation s'étendant, selon l'axe de rotation, dans l'orifice de fixation et dans au moins une partie du passage, de manière adaptée pour maintenir la bielle sur le support et empêcher la rotation de l'armature intérieure par rapport au support.

Dans des modes de réalisation préférés de l'invention, on peut éventuellement avoir recours en outre à l'une ou à l'autre des dispositions suivantes :
- le support comporte deux pattes de fixation munies chacune d'un orifice de fixation, le passage traversant l'armature intérieure s'étendant entre les deux orifices de fixation et deux tiges de fixation étant chacune engagée à la fois dans au moins une partie du passage et dans l'un des orifices de fixation ;
- chaque tige de fixation comporte une surface externe sur laquelle sont réparties des cannelures s'étendant longitudinalement parallèlement à l'axe de rotation ; dans ce cas, les cannelures augmentent la surface de contact entre l'armature intérieure et la tige de fixation, ainsi qu'entre cette tige de fixation et la patte de fixation ; la déformation de la matière de la patte de fixation et de l'armature intérieure lors de l'engagement en force de la tige de fixation permet d'assurer un maintien très efficace de la bielle sur son support ; ceci permet également d'augmenter, par rapport à un procédé d'assemblage avec vis et écrou, le couple pouvant être exercé entre la bielle et son support, sans rotation de l'armature intérieure par rapport au support ;
- chaque tige de fixation comporte une tête en butée sur une patte de fixation, du côté de celle-ci opposé à celui coopérant avec l'armature intérieure ; et
- chaque tige est en acier de la classe 10,9.

D'autres aspects, buts et avantages de l'invention apparaîtront à la lecture de la description d'un de ses modes de réalisation.

L'invention sera également mieux comprise à l'aide des dessins, sur lesquels :
- la figure 1 représente schématiquement, selon une coupe partielle, un support et une bielle d'un exemple de dispositif anti-vibratoire conforme à la présente invention ; et
- la figure 2 représente schématiquement, en perspective, un clou tel que ceux utilisés pour assembler la bielle et le support du dispositif anti-vibratoire représenté sur la figure 1.

Sur les différentes figures, les mêmes références désignent des éléments identiques ou similaires.

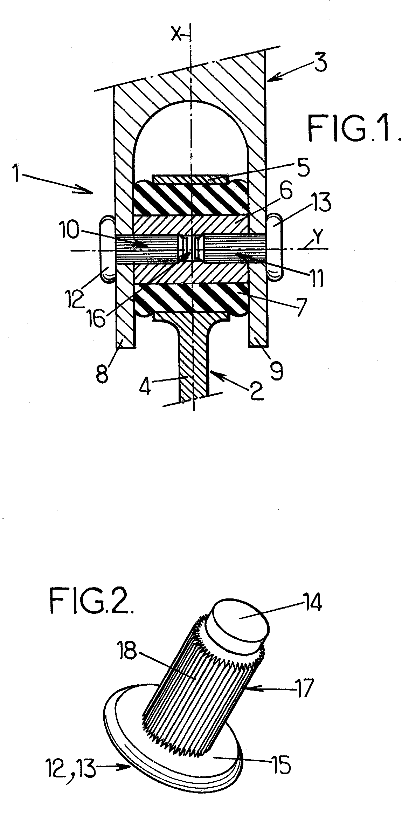

Selon un exemple de mode de réalisation d'un dispositif anti-vibratoire conforme à la présente invention, illustré sur la figure 1, ce dispositif 1 comporte une bielle 2 et un support 3.

La bielle 2 comprend un corps allongé 4, qui s'étend selon une direction longitudinale X et qui relie entre eux des premier 5 et deuxième manchons (le deuxième manchon n'est pas représenté).

Par mesure de simplification, seul le premier manchon 5 est décrit de manière détaillée ci-dessous. La structure de la bielle 2, au niveau du deuxième manchon, peut en effet être aisément déduite par l'Homme du Métier de la description faite ci-dessous de la bielle 2 au niveau du premier manchon 5.

Le premier manchon 5 est centré sur un axe de rotation Y et entoure une armature intérieure 6.

Le premier manchon 5, venu de matière avec le corps 4, ainsi que l'armature intérieure 6 sont constitués d'un matériau ductile tel que l'aluminium.

L'armature intérieure 6 est reliée au premier manchon 5 par l'intermédiaire d'une liaison souple 7. Cette liaison souple 7 se présente par exemple sous la forme d'un corps en élastomère adhérisé et surmoulé sur l'armature intérieure 6 et le premier manchon 5.

L'armature intérieure 6 se présente sous la forme d'un tube cylindrique de révolution autour de l'axe de rotation Y. L'intérieur de ce tube délimite un passage 16 qui s'étend selon l'axe de rotation Y pour traverser l'armature intérieure 6.

Le support 3 comporte deux pattes de fixation 8 et 9. Chaque patte de fixation 8 ou 9 est percée d'un orifice 10 ou 11. Les orifices 10 et 11 sont cylindriques et centrés sur un axe perpendiculaire aux directions d'extension des pattes de fixation 8 et 9.

Lorsque la bielle 2 est assemblée sur le support 3, les directions d'extension des pattes de fixation 8 et 9 sont sensiblement parallèles à l'axe longitudinal X de la bielle 2 et l'axe entre les orifices 10 et 11 coïncide sensiblement avec l'axe de rotation Y. L'armature intérieure 6 s'étend, selon l'axe de rotation Y, entre les deux pattes de fixation 8 et 9.

La bielle 2 est maintenue sur le support 3, grâce à des clous 12 et 13.

Comme représenté sur la figure 2, chaque clou 12 ou 13 comporte une tige de fixation 14 et une tête 15. Chaque clou 13 ou 14 est réalisé dans un acier de la classe 10,9.

Les clous 12 et 13 sont engagés en force tête-bêche dans les orifices 10 et 11, ainsi que sur sensiblement la moitié de la longueur du passage 16. Chaque tige de fixation 14 s'étend alors sensiblement parallèlement à l'axe de rotation Y (voir figure 1).

Chaque tige de fixation 14 comporte une surface externe 17 sur laquelle sont réparties des cannelures 18. Ces cannelures 18 s'étendent parallèlement à l'axe longitudinal de la tige de fixation 14. Lorsque les clous 12 et 13 sont en place pour assembler le support 3 et la bielle 2, la tête 15 vient en butée sur la patte de fixation 8 ou 9 correspondante (voir figure 1).

A titre d'exemple, pour une tige de fixation 14 de 12 mm de diamètre, les cannelures 18 peuvent correspondre à un moletage de 13,1 mm de diamètre, avec un pas de 1,3 aux normes DIN 82.

Les têtes 15 sont relativement aplaties (leur épaisseur est par exemple sensiblement égale à 5 mm). L'encombrement du dispositif anti-vibratoire selon l'invention est donc limité. Ceci a pour avantage de réduire les problèmes de positionnement du dispositif anti-vibratoire selon l'invention dans son environnement.

Le procédé d'assemblage selon l'invention permet de s'adapter aux dimensions, aux formes, ainsi qu'aux déformations des pattes de fixation 8 et 9 et de l'armature intérieure 6.

## Revendications

1. Procédé d'assemblage d'une bielle (2) sur un support (3),
- la bielle (2) comportant un corps (4) allongé selon une direction longitudinale entre des premier (5) et deuxième manchons appartenant au corps (4), dans laquelle au moins le premier manchon (5) entoure une armature intérieure (6), cette armature intérieure (6) étant mobile, par rapport au corps (4) de la bielle (2), autour d'un axe de rotation (Y), grâce à une liaison souple (7) intercalée entre elle (6) et le premier manchon (5), un passage (16) traversant l'armature intérieure (6) sensiblement selon l'axe de rotation (Y), et
- le support (3) comportant un moins une patte de fixation (8 ou 9) munie d'un orifice de fixation (10 ou 11), dans lequel on positionne la bielle (2) et le support (3) de manière à ce que le passage (16) traversant l'armature intérieure (6) soit en face de l'orifice de fixation (10 ou 11),
**caractérisé par le fait que** l'on engage à force une tige de fixation (14), selon l'axe de rotation (Y), dans l'orifice de fixation (10 ou 11) et dans au moins une partie du passage (16), de manière à maintenir la bielle (2) sur le support (3) et à empêcher la rotation de l'armature intérieure (6) par rapport au support (3).

2. Procédé selon la revendication 1, dans lequel le support (3) comporte deux pattes de fixation (8,9) munies chacune d'un orifice de fixation (10,11), dans lequel on positionne la bielle (2) et le support (3) de manière à ce que le passage (16) traversant l'armature intérieure (6) s'étende entre les deux orifices de fixation (10,11) et dans lequel on engage à force une tige de fixation (14) de manière à ce qu'elle passe à la fois par le passage (16) et par chacun des orifices de fixation (10,11).

3. Procédé selon la revendication 1, dans lequel le support (3) comporte deux pattes de fixation (8,9) munies chacune d'un orifice de fixation (10,11), dans lequel on positionne la bielle (2) et le support (3) de manière à ce que le passage (16) traversant l'armature intérieure (6) s'étende entre les deux orifices de fixation (10,11) et dans lequel on engage à force deux tiges de fixation (14) de manière à ce que chacune d'elles soit engagée à la fois dans au moins une partie du passage (16) et dans l'un des orifices de fixation (10,11).

4. Dispositif anti-vibratoire comportant une bielle (2) et un support (3),
- la bielle (2) comportant un corps (4) allongé selon une direction longitudinale entre des premier (5) et deuxième manchons appartenant au corps (4), dans laquelle au moins le premier manchon (5) entoure une armature intérieure (6), cette armature intérieure étant mobile, par rapport au corps (4) de la bielle (2), autour d'un axe de rotation (Y), grâce à une liaison souple (7) intercalée entre elle (6) et le premier manchon (5), et un passage (16) traversant l'armature intérieure (6) sensiblement selon l'axe de rotation (Y), et
- le support (3) comportant un moins une patte de fixation (8 ou 9) munie d'un orifice de fixation (10 ou 11), dans lequel la bielle (2) et le support (3) sont assemblés de manière à ce que le passage (16) traversant l'armature intérieure (6) soit en face de l'orifice de fixation (10 ou 11),
**caractérisé par le fait que** la bielle (2) et le support (3) sont assemblés au moyen d'au moins une tige de fixation (14) s'étendant, selon l'axe de rotation (Y), dans l'orifice de fixation (10 ou 11) et dans au moins une partie du passage (16), de manière adaptée pour maintenir la bielle (2) sur le support (3) et empêcher la rotation de l'armature intérieure (6) par rapport au support (3).

5. Dispositif anti-vibratoire selon la revendication 4, dans lequel le support (3) comporte deux pattes de fixation (8,9) munies chacune d'un orifice de fixation (10,11), le passage (16) traversant l'armature intérieure (6) s'étendant entre les deux orifices de fixation (10,11) et deux tiges de fixation (14) étant chacune engagée à la fois dans au moins une partie du passage (16) et dans l'un des orifices de fixation (10,11).

6. Dispositif anti-vibratoire selon l'une des revendications 4 et 5, dans lequel chaque tige de fixation (14) comporte une surface externe (17) sur laquelle sont réparties des cannelures (18) s'étendant longitudinalement parallèlement à l'axe de rotation (Y).

7. Dispositif anti-vibratoire selon l'une des revendications 4 à 6, dans lequel chaque tige de fixation (14) comporte une tête (15) en butée sur une patte de fixation (8,9), du côté de celle-ci opposé à celui coopérant avec l'armature intérieure (6).

8. Dispositif anti-vibratoire selon l'une des revendications 4 à 7, dans lequel chaque tige de fixation (14) est en acier de la classe 10,9.
